# EUROPÄISCHE PATENTSCHRIFT

(11) **EP 1 014 044 B1**
(45) Veröffentlichungstag und Bekanntmachung des Hinweises auf die Patenterteilung: **06.12.2006**
(21) Anmeldenummer: 99125174.5
(22) Anmeldetag: 17.12.1999
(51) Int. Cl.: G01D 11/02, F16D 1/08, F16D 1/09

(54) **Selbstzentrierende Taktscheibennabe und Verfahren zu ihrer Montage**
Self-centering encoder disc hub and method for mounting the same
Dispositif à centrage automatique d'un moyeu d'un disque de codeur et son procédé de montage

(30) Priorität: 23.12.1998 DE 19860012
(43) Veröffentlichungstag der Anmeldung: 28.06.2000
(73) Patentinhaber: PWB-Ruhlatec Industrieprodukte GmbH, 99846 Seebach (DE)
(72) Erfinder: Braun, Paul-Wilhelm, D-53842 Troisdorf (DE)
(74) Vertreter: Müller-Wolff, Thomas

(56) Entgegenhaltungen:
- EP-A- 0 468 147
- DE-A- 19 641 929
- GB-A- 1 241 455

## Beschreibung

Die Erfindung betrifft eine selbstzentrierende Taktscheibennabe mit einer Taktscheibenauflagefläche (1a) und einem rohrförmigen Nabenschaft (1b), der zumindest im Bereich der Motorwelle W geschlitzt ist und dessen Schaftende auf eine Motorwelle aufschiebbar ist, wobei im Nabenschaft eine Kontaktfläche zwischen Innenwand des Nabenschaftes und Motorwelle entsteht.

Selbstzentrierende Taktscheibe der eingangs genannten Art sind aus der DE 196 41 929 A1 (RUHLATEC Industrieprodukte GmbH) bekannt. Die Taktscheibennabe ist dort in einem Encoder eingebaut, der mit einem Motor durch einfache Drehbewegung verbunden werden kann.

Die EP 046 81 47 zeigt eine Befestigung für das Lüfterrad eines Lüftergebläses auf einer Antriebswelle, die aus einem schwierig zu bearbeitenden Werkstoff wie beispielsweise einem keramischen Werkstoff besteht. Hierzu wird eine durchgehend geschlitzte Nabe in Form einer Hülse verwendet, die ein Außengewinde trägt, über das eine rohrförmige Mutter aufgeschraubt wird. Nach einem Ausführungsbeispiel wird die durchgehend geschlitzte Nabe mit einem Sperrring gesichert, wobei Tellerfedern einen permanenten Axialdruck erzeugen.

Nach GB 1241455 werden Klemmringe auf dem Schaftende einer Welle befestigt, wobei eine Klemmvorrichtung mit Klemmbacken verwendet wird. Die Klemmbacken weisen Vorsprünge auf, die die Klemmringe sichern sollen. Bei einer Bewegung eines Klemmringes werden die Klammbacken zusammengepresst und damit der oder die Ringe auf dem Schaftende fixiert.

Bei der Montage von Taktscheibennaben auf einer Motorseite ist darauf zu achten, dass für die Zentrierung auf der Motorwelle ausreichend Spiel vorhanden ist. Deshalb hat die Taktscheibennabe an ihrem dem Motor zugewandten Ende eine Fangbohrung mit der die Vertikalachsen von Welle und Taktscheibe in eine Linie gebracht werden. Beim Einschieben der Welle in die Taktacheibennabe erfolgt bisher eine Verpressung, weil die im Durchmesser verengte Nabe auf die feinbearbeitete Nabe gedrückt wird. Der axiale Druck wird Ober eine Gehäusefläche auf die Tektscheibenauflagefläche ausgeübt und bringt diese und die mit ihr in Verbindung stehende Taktscheibennabe in die richtige Position für eine zentrische Anordnung im Encodergehäuse.

Die Anwendung von derartigen Taktscheiben nimmt immer mehr zu, so dass inzwischen sehr hohe Stückzahlen erreicht werden. Dabei entsteht insbesondere in der Massenfertigung ein Problem durch die hohen Anforderungen an die Oberflächengüte von Motorwelle und Taktscheibennabe, bzw. an die Fertigungsgenauigkeit, um die erforderlichen Toleranzen einzuhalten. Schon eine geringfügige Verschiebung der Taktscheibe zur Motorwelle genügt, um die Funktion beispielsweise bei Servomotoren zu beeinträchtigen. Durch die hohen Kräfte beim Verpressen wirken sich Toleranzunterschiede erheblich aus.

Aufgabe der vorliegenden Erfindung ist es daher, eine Taktscheibennabe mit selbstzentrierenden Eigenschaften herzustellen, die ohne Vorspannung auf eine Motorwelle aufgesetzt, justiert und gesichert werden kann. Die Montage soll unter Massenfertigungsbedingungen mit der bei Encodern erforderlichen Genauigkeit durchführbar sein.

Die Aufgabe wird durch die in den Ansprüchen 1 und 8 angegebenen Merkmale gelöst. Es hat sich gezeigt, daß eine erfindungsgemäß ausgebildete Taktscheibennabe gleichzeitig mit der Montagebewegung auf die Motorwelle aufgeschoben und verspannt werden kann, ohne daß durch die Montagebewegung eine Verschiebung der Taktscheibenachse zur Motorwellonachso erfolgt. Die zur Montage erforderlichen Kräfte sind sehr gering, da keine Preßsitze hergestellt werden, sondern Nabe und Welle während der Montage aufeinandergleiten und anschließend erst miteinander fixiert werden.

Im folgenden wird die Erfindung anhand mehrerer Ausführungsbeispiele näher erläutert.

Es zeigen:
- Figur 1: Querschnitt durch eine erfindungsgemäße Taktscheibenabe vor der Montage,
- Figur 2: Querschnitt durch einer erfindungsgemäße Taktscheibennabe nach der Montage auf einer Motorwelle,
- Figur 3: Prinzipskizze zur Erläuterung des Montagevorganges,
- Figur 4: Ansicht BB gemäß Figur 3 von der Motorwellenanschlußseite her,
- Figur 5: Vergrößerter Ausschnitt A nach Figur 4,
- Figur 6: Vormontiertes Gehäuse gemäß DE 196 41 921 A1.

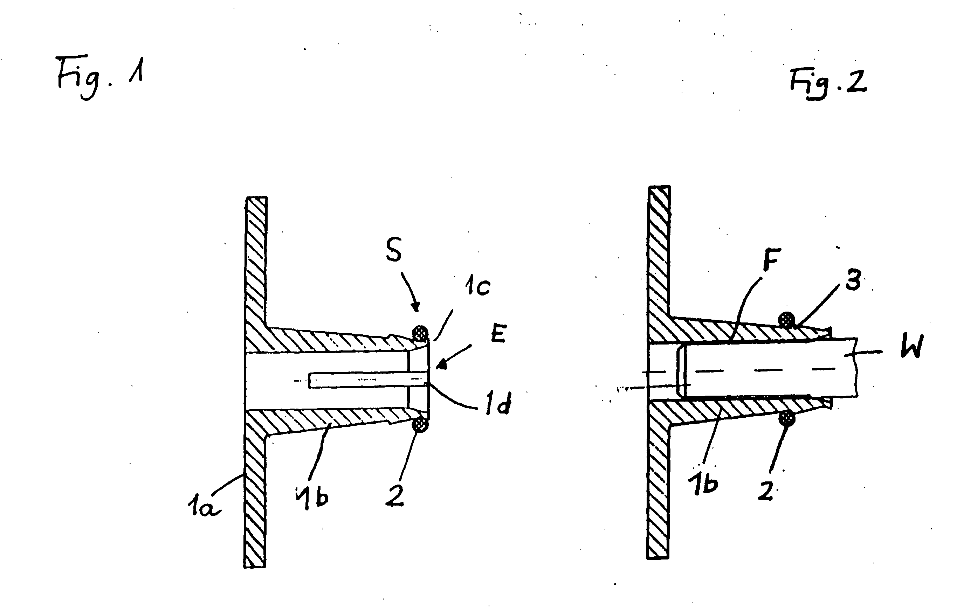

In Figur 1 ist die erfindungsgemäße Taktscheibennabe mit einer Taktscheibenauflagefläche 1a und einem rohrförmigen Nabenschaft 1b im Querschnitt dargestellt. Man erkennt, daß die Außenwandung des Nabenschaftes 1b konusförmig ausgebildet ist, wobei der Konuswinkel vom Schaftende E zur Taktscheibenauflagefläche 1a hin ansteigt. Im Nabenschaft sind Schlitze 1d eingeformt, die bis in den Kontaktbereich mit der Motorwelle W reichen (Figur 2).

Am Ende des Nabenschaftes 1b ist eine Anschlagfläche 1c angeformt, die einem Spannelement S einen sicheren Halt in der Ruheposition vor der Montage gibt. Das Spannelement S besteht vorzugsweise aus einem Spannring 2, der in seiner Ruheposition nicht vorgespannt ist, sondern locker auf der Außenwandung des Schaftendes liegt.

In Figur 2 ist die erfindungsgemäße Taktscheibennabe nach der Montage auf der Motorwelle W dargestellt. Man erkennt, daß der Spannring 2 in seine Spannposition auf der konischen Außenwandung des Nabenschaftes 1b vorgerückt ist. Er wird in der vorgerückten Position (Spannposition) auf einer Rastfläche 3 gehalten und sichert in dieser Stellung eine rutschfreie, kraftschlüssige Verbindung zwischen Welle und Taktscheibennabe.

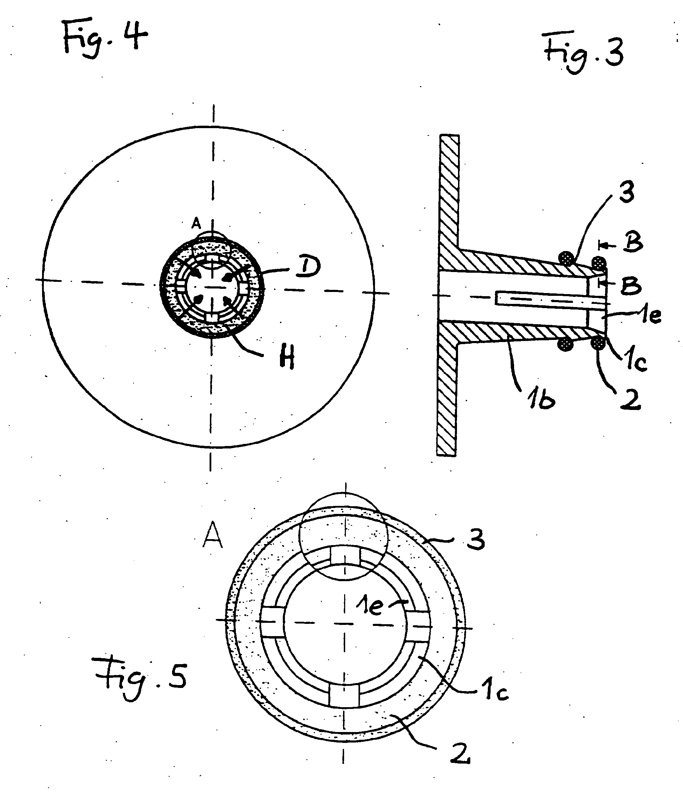

Figur 3 verdeutlicht schematisch den Montagevorgang. Mit dem Aufschieben der Taktscheibennabe 1b auf eine Welle W wird der Spannring 2 aus seiner vorderen Position auf den Konus geschoben, so daß eine Verspannung mit der Welle W eintritt. Da die Welle aus Kunststoff - vorzugsweise vom Typ ABS - besteht, genügen schon geringe Spannkräfte um einen sicheren Halt der Taktscheibe auf der Welle B zu ermöglichen. Dies ist anhand von Figur 4, in Draufsicht von der Motorwellenseite her, dargestellt.

Die Schlitzbreite ist vorzugsweise größer als die Wanddicke der rohrförmigen Taktscheibennabe. Bei mindestens vier Schlitzen, die gleichmäßig über den Rohrumfang der Taktscheibennabe verteilt sind, ergibt dies einen relativ elastischen Körper, der durch geringe äußere Preßkräfte in engen Kontakt mit der Welle W gebracht werden kann. In Figur 4 ist angedeutet, wie der Spannring aus der Ruheposition (hellgraue Fläche H) in die gespannte Position (dunkle Fläche D) geschoben wird. Wenn der Spannring, wie in einem bevorzugten Ausführungsbeispiel, aus einem Gummiring besteht, wirken die Spannkräfte in Pfeilrichtung auf die Motorwelle ein.

Gleichzeitig ist es erforderlich, daß der Spannring in beiden Positionen sicher auf der Taktscheibennabe gehalten wird. In dem vergrößerten Ausschnitt A gemäß Figur 5 ist erkennbar, daß die Wulst 1c den Spannring in der Ruheposition sicher auf der Nabe hält. Mit 1e ist eine konusförmige Erweiterung am Ausgangsende E der erfindungsgemäßen Taktscheibennabe bezeichnet, die als Fangbohrung für die Motorwelle dient.

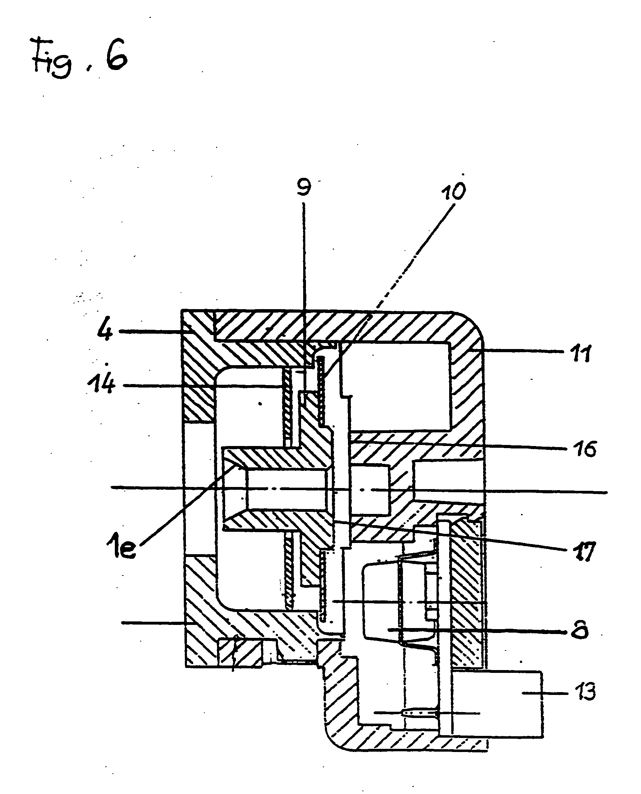

Zum Vergleich mit einer Taktscheibe nach dem Stand der Technik und zur Erläuterung der Einbausituation ist in Figur 6 ein Querschnitt durch einen Encoder im vormontierten Zustand dargestellt. Mit 4 ist die Grundplatte des Encodergehäuses 11 bezeichnet, die gegen die Motorseite angeflanscht wird.

Auf der Nabe 9 ist eine Taktscheibe 10 angeordnet, die durch einen Sicherungsring 14 im vormontierten Zustand gegen Herausfallen gesichert ist. Am oberen Ende der Nabe 9 ist eine Zentrierfläche 17 ausgebildet, die eine selbsttätige Zentrierung in Verbindung mit der Führungsfläche des Gehäuses 16 ermöglicht.

Seitlich daneben ist eine Sensoreinheit 8 mit Anschlußleiste 13 angeordnet. Die bekannte Encodereinheit kann auch für die Zwecke der vorliegenden Erfindung genutzt werden, sofern die Taktscheibe 9 gegen eine erfindungsgemäß ausgebildete Taktscheibennabe ausgetauscht wird.

Anhand von Versuchen wurde festgestellt, daß mit dem erfindungsgemäßen Montageverfahren ein exaktes Ausrichten der Taktscheibenachse zur Motorwellenachse möglich ist. Damit verbunden sind geringe Montagekräft, so daß keine Biegespannungen auf die Taktscheibe übertragen werden können. Durch die konstruktive Gestaltung der Raststellungen für den Sicherungsring kann eine dauerhafte Fixierung der Taktscheibe auf der Taktscheibennabe gewährleistet werden. Zusätzlich wurde in Versuchen mit verschiedenen Materialien festgestellt, daß nach der Erfindung hergestellte Taktscheiben auch dann einen hervorragenden, paßgenauen Sitz aufweisen, wenn die Motorwelle nur eine verringerte Oberflächengüte aufweist. Somit können die Fertigungskosten weiter gesenkt werden, ohne daß die Fertigungsqualität beeinträchtigt wird.

## Patentansprüche

1. Selbstzentrierende Taktscheibennabe mit einer Taktscheibenäutlagefläche (1a) und einem rohrförmigen Nabenschaft (1b), der zumindest im Bereich der Motorwelle (W) geschlitzt ist und dessen Schaftende auf eine Motorwelle aufschiebbar ist, wobei im Nabenschaft eine Kontaktfläche zwischen Innenwandung des Nabenschaftes und Motorwelle entsteht,
**dadurch gekennzeichnet,**
**dass** die Außenwandung des Nabenschaftes (1b) zumindest teilweise konusförmig ausgebildet ist, mit einem Konuswinkel, der vom Schaftende (E) zur Taktscheibenauflagefläche (1a) hin ansteigt,
**dass** am Schaftende (E) auf der Außenwandung ein als Spannring (2) aus einem elastischen Kunststoffmaterial ausgebildetes Spannelement verschieblich angeordnet ist, dass der Nabenschaft (1 b) an derAußenwandung im Bereich des offenen Endes des Schlitzes eine Anschlagfläche (1c) für die Ruheposition des Spannelementes aufweist und dass im ersten Drittel des Nabenschaftes (1b), von der Motorwetlenseite her gesehen, eine Rastfläche (3) am Außenumfang des Nabenschaftes für die Spannposition des Spannelementes eingearbeitet ist.

2. Selbstzentrierende Taktscheibennabe nach Anspruch 1, **dadurch gekennzeichnet, dass** der Konsuwinkel im Bereich von 10-15° liegt.

3. Selbstzentrierende Taktscheibenannabe nach einem der vorhergehenden Ansprüche, **dadurch gekennzeichnet, dass** die Länge des Schlitzes im Nabenschaft (1 b) im Bereich von 0,5 - 0,8 der Kontaktfläche NabenschaftlMotorwclle liegt.

4. Selbstzentrierende Taktscheibennabe nach einem der vorhergehenden Ansprüche, **dadurch gekennzeichnet, dass** die Breite des Schlitzes im Bereich von 1 - 2 mm liegt.

5. Selbstzentrierende Taktscheibennabe nach einem der vorhergehenden Ansprüche, **dadurch gekennzeichnet, dass** die Rastfläche eine wulstförmige Erhebung (3a) auf dem Außenumfang des Nabenschaftes aufweist

6. Selbstzentrierende Taktscheibennabe nach einem der vorhergehenden Ansprüche, **dadurch gekennzeichnet, dass** am motorwellenseitigen Schaftende die Innenwandung des Nabenschaftes (1b) konusförmig erweitert ist.

7. Selbstzentrierende Taktscheibennabe nach einem der vorhergehenden Ansprüche, **dadurch gekennzeichnet, dass** die konusförmige Erweiterung an der Innenwandung des Nabenschaftes von der Stirnseite bis in einen Bereich von 20 % der Nabenschaftlänge reicht.

8. Verfahren zur Montage einer selbstzentrierenden, geschlitzten Taktscheibennabe auf einer Welle, insbesondere einer Motorwelle eines Encoders, wobei die Taktscheibennabe mit einer Taktscheibenauflagefläche (1a) und mit einem rohrförmigen Nabenschaft (1b) versehen ist, dessen Schaftende zur Motorwelle hinweist, **dadurch gekennzeichnet, dass**
die Außenwandung des Nabenschaftes (1b) zumindest teilweise konusförmig ausgebildet ist, mit einem Konuswinkel, der vom Schaftende (E) zur TaRischeibenautlagefläche (1a) hin ansteigt,
dass am Schaftende (E) auf der Außenwandung ein als Spannring (2) aus einem elastischen Kunststoffmaterial ausgebildetes Spannelement verschieblich angeordnet ist, wobei der Nabenschaft (1b) an der Außenwandung im Bereich des offenen Endes des Schlitzes eine Anschlagfläche (1c) für die Ruheposition des Spannelementes aufweist und wobei im ersten Drittel des Nabenschaftes (1b), von der Motorwellenseite her gesehen, eine Rastfläche (3) am Außenumfang des Nabenschaftes für die Spannposition des Spannelementes eingearbeitet ist
und dass beim Aufdrücken der Taktscheibennabe auf die Motorwelle der Spannring von einer entspannten in eine gespannte Position geschoben wird.

## Claims

1. A self-centring encoder disc hub having an encoder disc supporting face (1a) and a tubular hub shank (1b) which is slotted at least in the region of the motor shaft (W) and whose shank end can be slid on to a motor shaft, wherein, in the hub shank, there is obtained a contact face between the inner wall of the hub shank and the engine shaft,
**characterised in**
**that** the outer wall of the hub shank (1b) is at least partially conical and comprises a cone angle which rises from the shank end (E) to the encoder disc supporting face (1a);
**that** at the shank end (E), on the outer wall, there is displaceably arranged a tensioning element provided in the form of a tensioning ring (2) consisting of an elastic plastic material, that the hub shank (1b), on the outer wall in the region of the open end of the slot, comprises an abutment face (1c) for the resting position of the tensioning element and that in the first third of the hub shank (1 b) - if viewed from the motor shaft end - there is worked in an engagement face (3) on the outer circumference of the hub shank for the tensioning position of the tensioning element.

2. A self-centring encoder disc hub according to claim 1,
**characterised in**
**that** the cone angle ranges between 10 and 15°.

3. A self-centring encode disc hub according to any one of the preceding claims,
**characterised in**
**that** the length of the slot in the hub shank (1b) ranges between 0.5 and 0.8 of the contact face of the hub shank/motor shaft.

4. A self-centring encoder disc hub according to any one of the preceding claims,
**characterised in**
**that** the width of the slot ranges between 1 and 2 mm.

5. A self-centring encoder disc hub according to any one of the preceding claims,
**characterised in**
**that** the engagement face comprises a bead-shaped raised portion (3a) on the outer circumference of the hub shank.

6. A self-centring encoder disc hub according to any one of the preceding claims,
**characterised in**
**that** at the shank end facing the motor shaft, the inner wall of the hub shank (1b) is widened conically.

7. A self-centring encoder disc hub according to any one of the preceding claims,
**characterised in**
**that** the conical widening at the inner wall of the hub shank extends from the end face as a far as a region of 20 % of the hub shank length.

8. A method of mounting a self-centring, slotted encoder disc hub on a shaft, more particularly a motor shaft of a slotted encoder, wherein the encoder disc hub is provided with an encoder supporting face (1a) and with a tubular hub shank (1b) whose shank end points towards the motor shaft,
**characterised in**
**that** the outer wall of the hub shank (1b) is at least partially conical and comprises a cone angle which rises from the shank end (E) to the encoder disc supporting face (1a);
**that** at the shank end (E), on the outer wall, there is displaceably arranged a tensioning element provided in the form of a tensioning ring (2) consisting of an elastic plastic material, that the hub shank (1 b), on the outer wall in the region of the open end of the slot, comprises an abutment face (1c) for the resting position of the tensioning element, wherein in the first third of the hub shank (1b) - if viewed from the motor shaft end - there is worked in an engagement face (3) on the outer circumference of the hub shank for the tensioning position of the tensioning element;
and **that** when pressing the encoder disc hub on to the motor shaft, the tensioning ring is displaced from an untensioned into a tensioned position.

## Revendications

1. Un moyeu à centrage automatique pour disque codeur avec une surface d'appui (1a) du disque codeur et une tige de moyeu tubulaire (1b), qui est fendue au moins dans la région de l'arbre du moteur (W) et dont la tige du moyeu peut être enfilée sur l'arbre d'un moteur, une surface de contact se formant dans la tige du moyeu entre sa paroi intérieure et l'arbre du moteur.
**caractérisé par le fait**
**que** la paroi extérieure de la tige du moyeu (1b) est au moins en partie de forme conique, avec un angle de cône allant en augmentant du bout de la tige du moyeu (E) jusqu'à la surface d'appui du disque codeur (1a),
**qu'**un élément de serrage en matière synthétique flexible est monté de manière déplaçable comme anneau tendeur (2) à la paroi extérieure au bout de la tige (E), que la tige du moyeu (1b) à la paroi extérieure, à l'endroit de la terminaison ouverte de la fente, possède une surface de butée (1c) pour la position d'arrêt de l'élément de serrage, et que dans le premier tiers de la tige du moyeu (1b), vu du coté de l'arbre du moteur, le coté extérieur de la tige du moyeu présente une surface d'arrêt (3) pour la position de fixation de l'élément de serrage.

2. Un moyeu à centrage automatique pour disque codeur conformément à la revendication 1, **caractérisé par le fait que** l'angle du cône est dans une marge de 10 à 15°.

3. Un moyeu à centrage automatique pour disque codeur conformément à l'une des revendications sus-mentionnées, **caractérisé par le fait que** la longueur de la fente de la tige de moyeu (1b) est déterminée entre 0,5 et 0,8 de la surface de contact tige du moyeu/arbre du moteur.

4. Un moyeu à centrage automatique pour disque codeur conformément à l'une des revendications sus-mentionnées, **caractérisé par le fait que** la largeur de la fente est entre 1 à 2 mm.

5. Un moyeu à centrage automatique pour disque codeur conformément à l'une des revendications sus-mentionnées, **caractérisé par le fait que** la surface d'arrêt présente un bourrelet (3a) sur le coté extérieur de la tige du moyeu.

6. Un moyeu à centrage automatique pour disque codeur conformément à l'une des revendications sus-mentionnées, **caractérisé par le fait que** la paroi intérieure de la tige du moyeu (1b) est élargie en forme de cône au bout de la tige, du coté de l'arbre du moteur.

7. Un moyeu à centrage automatique pour disque codeur conformément à l'une des revendications sus-mentionnées, **caractérisé par le fait que** l'élargissement conique à la paroi intérieure de la tige du moyeu s'étend du coté frontal jusqu'à 20 % de la longueur de la tige.

8. Un procédé de montage d'un moyeu de disque codeur à fente à centrage automatique sur un arbre, en particulier sur l'arbre de moteur d'un codeur, le moyeu du disque codeur étant muni d'une surface d'appui du disque codeur (1a) et d'une tige de moyeu tubulaire, dont le bout de la tige est dirigé vers l'arbre du moteur, **caractérisé par le fait que**
la paroi extérieure de la tige du moyeu (1b) est exécutée au moins en partie de forme conique, avec un angle de cône allant en augmentant du bout de la tige du moyeu (E) jusqu'à la surface d'appui du disque codeur (1a),
qu'un élément de serrage en matière synthétique flexible est monté de manière déplaçable comme anneau tendeur (2) à la paroi extérieure au bout de la tige (E), que la tige du moyeu (1b) à la paroi extérieure, à l'endroit de la terminaison ouverte de la fente, possède une surface de butée (1c) pour la position d'arrêt de l'élément de serrage, et que dans le premier tiers de la tige du moyeu (1b), vu du coté de l'arbre du moteur, le coté extérieur de la tige du moyeu présente une surface d'arrêt (3) pour la position de fixation de l'élément de serrage.
